(19) Europäisches Patentamt
European Patent Office
Office européen des brevets

(11) EP 3 187 361 A1

(12) EUROPEAN PATENT APPLICATION

(43) Date of publication:
05.07.2017 Bulletin 2017/27

(51) Int Cl.:
B60L 11/18 (2006.01)          B60L 1/00 (2006.01)
B60L 11/12 (2006.01)

(21) Application number: 15461592.6

(22) Date of filing: 31.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: MARCO-SYSTEM Mieszko Cleplinski
02-878 Warszawa (PL)

(72) Inventors:
• CHOJNACKI, Artur
00-891 Warszawa (PL)
• KALISIAK, Zbigniew
02-793 Warszawa (PL)

(74) Representative: Patpol Kancelaria Patentowa Sp.
z o.o.
ul Nowoursynowska 162 J
02-776 Warszaw (PL)

(54) **BATTERY CHARGING SYSTEM AND METHOD**

(57) The object of the invention is a battery charging system and method. The invention is particularly useful in vehicles, particularly in public transport vehicles. The battery charging system, particularly in a vehicle, comprising a battery B chargeable from a primary source of energy, connected to a battery charging device, as well as a voltage V measurement assembly of the battery and a discharging current A measurement assembly, characterised in that the battery charging device comprises a memory module BC with a characteristics of the battery B, a memory module PRS with a predicted work plan of the battery and a predicted load, a module PRSA of the energy demand analyser adjusted to generate a charging current control information CP of the battery B based on an analysis of the energy balance, connected to a module BCM for the battery status analysing and controlling the adjustable source of current with a voltage limiter of the battery.

Fig. 4

**Description**

The invention relates to a system and a method of charging batteries. The invention is intended to charge a battery in electrical and electronic circuits powered interchangeably by the battery and an alternative power source, in which cyclical charging and discharging occurs.

The invention is particularly useful with batteries in electrical or internal combustion vehicles, which charge and discharge interchangeably, powering the devices of the vehicle when there is no access to energy originating from other sources (an internal combustion engine, an external power supply), or charging them using these sources. In particular, the invention is useful for the public transport vehicles, e.g. buses.

The system and method for charging batteries in public transport vehicles with an electrical motor powered by contact lines has been disclosed in document EP0386812. The battery is charged during the normal movement of the vehicle and it is also capable of powering additional electrical units of this vehicle.

However, in this abovementioned system and method, and in other known systems and methods of charging batteries, the main emphasis is put on adjusting the charging method to the characteristics of the given type of the battery, protection of the battery against damage during the charging process and on shortening the charging period. This type of methods is limited only to an analysis of the current state of charge of the battery, and the charging process is predetermined. Such system is known for example from document CN2783342Y.

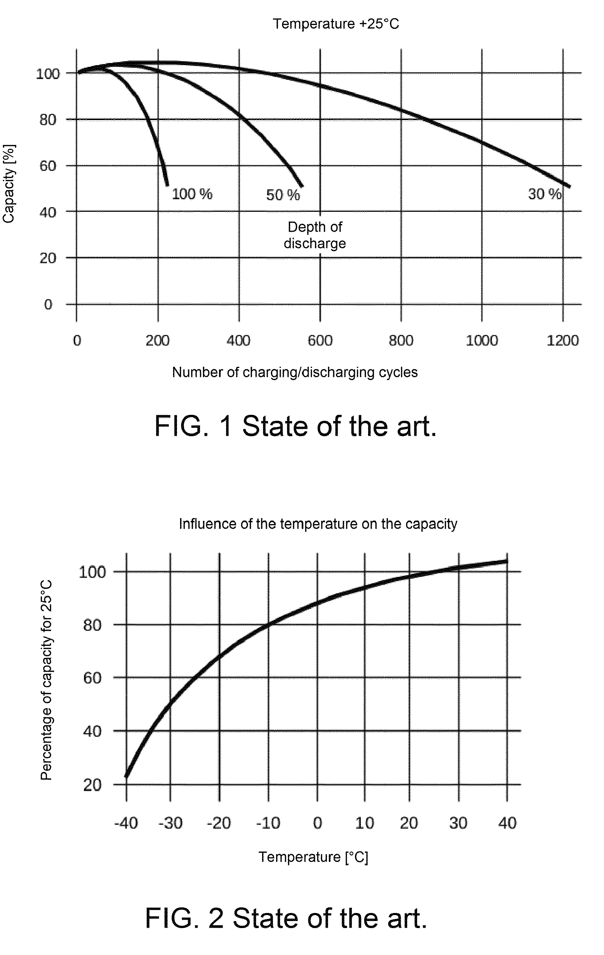

Meanwhile, the problem remains that the batteries have shorter life, if lead to a state of extensive discharging. For example, in the acid batteries, increasing the extent of discharge from 30% to 50% results in a twofold decrease in the number of working cycles of such battery (see Fig. 1).

For this reason, the problem of shortening of life of the batteries is particularly visible in electrical or internal combustion vehicles, which charge when travelling, and discharge during stoppage. The known systems do not prevent the life of the batteries from shortening, which is caused by a too high charging current or by the high extent of discharge.

The life and operation of the battery is also affected by the temperature in which it works. Fig. 2 presents the impact of the ambient temperature on the capacity of the battery. In a case of acid batteries, a decrease in the ambient temperature to -30 °C results in reducing its effective capacity to approximately 50% of its nominal capacity (measured in the temp. of +25 °C).

These problems are particularly visible in applications where cyclical charging and discharging of the battery occurs, with varying charging and discharging time in each cycle. An example of such use of the batteries is the public transport vehicles with electrical or internal combustion engines provided with electronic systems, whose powering is maintained by the battery during stoppage of the vehicle, e.g. on a stop or in a depot, while charging of the battery takes place from an alternator propelled by an internal combustion engine (e.g. petrol or autogas), or from another alternative source, e.g. from the contact lines, between stops. In this kind of applications like the public transport it is impossible to choose a vehicle which would travel the given route, or the correct moment of charging the battery. All vehicles of the fleet must theoretically travel the routes assigned to them independently, regardless of the time of the day and the atmospheric conditions, so that the continuity and the adequate quality of the public transport service are maintained.

The purpose of the invention is to provide a battery charging system and method which in a comprehensive manner will ensure its longer life.

These problems have been solved by providing a battery charging system and method, particularly for the public transport vehicles, which would be adaptable and which would take into account the predicted working cycles of the battery and the current usage profile of the battery in order to provide both the optimal charging current as well as the optimal state of charge in each charging cycle between stoppages.

The abovementioned disadvantages are avoided due to the battery charging method which is based on an iterative analysis of the energy demand and of the status of the battery, which ongoingly delivers information to control the charging process, by doing so allowing an ongoing determination of the optimal working point of the battery in order to extend its life.

The gist of the invention involves the fact that a battery charging system, particularly in the vehicle, comprising a battery B chargeable from a primary source of energy, connected to a battery charging device, as well as a voltage V measurement assembly of the battery and a discharging current A measurement assembly, is characterised in that the battery charging device comprises a memory module BC with characteristics of the battery B, a memory module PRS with a predicted operation plan of the battery and a predicted load, a module PRSA of the energy demand analyser adjusted to generate a battery B charging control information CP based on an analysis of the energy balance, connected to a module BCM for the battery status analysing and controlling the adjustable source of current with a voltage limiter of the battery.

Preferably, the module PRSA of the energy demand analyser comprises means for generating a control information LP for at least one external load reduction assembly LR.

Preferably, the module BCM for the battery status analysing and controlling the adjustable source of current with a voltage limiter of the battery comprises means for determining the state of charge of the battery taking into account at least the ambient temperature.

It is also preferable that the memory module PRS with the predicted work plan of the battery and the predicted load comprises an information about the timetable of the vehicle and a catalogue of information on the devices installed in the vehicle.

Thanks to the possibility to collect data on the predicted charging and discharging plan for the batteries from the memory module PRS, it is possible to determine the maximum available battery charging time within the selected timeframe, which may be for example determined in a case of public transport vehicles for the time of the realisation of the transportation tasks for the whole day. Moreover, due to the possibility to collect data on a predicted plan of charging and discharging of the batteries as well as on a planned load from the memory module PRS, it is possible to determine the energy demand for the battery within the given timeframe.

Due to the integration of an energy demand analyser module PRSA in the system it is possible to determine the energy demand for the selected battery working time. Moreover, due to an analysis of the energy balance, it is possible to detect a situation in which it is impossible to charge the battery and it is not possible to provide the required level of energy for the selected duration for the selected load.

Additionally, thanks to the integration of means for determining a control information for an external load reduction assembly LR in the system, uninterrupted work of the battery is ensured while maintaining its optimal working conditions even when detecting a shortage of energy within the selected timeframe.

The most advantages result from the adjustment of the module of the energy demand analyser PRSA for the calculation of the energy balance and for the generation of an optimal control information for the charging process of the battery, including information on the charging current and the charging time. Thanks to this, optimal working conditions of the battery are ensured for the selected time period, by doing so extending its life.

In another embodiment of the invention, the gist involves the fact that a battery charging method, particularly in a vehicle, comprising a step of measuring the current state of charge of the battery by measuring the voltage and the discharging current, is characterised in that it also comprises a step of delivering an information on the characteristics of the battery B, a step of delivering an information on the predicted work plan of the battery and on the planned load, a step of delivering the information on the allowed minimum charge in the battery, a step of determining the energy demand for at least one discharging cycle of the battery B, a step of determining the current and the battery charging time for at least one charging cycle of the battery B as part of the analysis of the energy balance, based on the information on the characteristics of the battery B, the current state of charge of the battery B, the allowed minimum charge of the battery B as well as the energy demand for at least one discharging cycle of the battery B, a step of controlling an adjustable source of current with the voltage limiter of the battery based on the determined current and the battery charging time for at least one charging cycle of the battery B.

Preferably, the battery charging current and time are determined based on the energy balance formula in a single charging and discharging cycle, expressed as a function of the current and the battery charging and discharging time

$$Q_{init\_i-1} + \int_{Tch\arg} I_{ch\arg} dt - \int_{Tdech\arg} I_{dech\arg} dt \geq Q_{\min} \; .$$

Preferably, the battery charging current and time are determined based on the energy balance formula

$$Q_{init\_i-1} + \sum_{i=1}^{n} \int_{Tch\arg} I_{ch\arg} dt - \sum_{i=1}^{n} \int_{Tdech\arg} I_{dech\arg} dt \geq Q_{\min}$$

in a series of n charging and discharging cycles of the battery from the activation of the system, when the charge stored in the battery equals Qinit_i-1.

The idea of the method according to the invention is an automatic, cyclic charging of the battery with the adjustment of the charging current and time, in which method the battery charging current and time are determined based on the predicted energy demand of the powered assembly, the current state of charge of the battery as well as the current characteristics of the battery, so that at the same time: 1) the degree of charging of the battery sufficient for powering the load points of current for the predefined time is ensured, 2) the charging current and the final degree of charging are limited in order to extend the life of the battery and reduce the energy losses, and 3) the degree of discharging of the battery is limited in order to extend the life.

The battery charging system and method according to the invention are presented in detail in the embodiments with reference to the attached drawings, in which:

Fig. 1 presents a chart showing the life of the battery depending on the extent of discharge according to the state of the art;

Fig. 2 presents a chart showing the impact of the ambient temperature on the capacity of the battery according to the state of the art;

Fig. 3 presents a schematic view of the battery charging system according to the invention;

Fig. 4 presents a schematic view of the battery charging system according to another embodiment of the invention; according to another example of realisation of the invention;

In the description, the following meaning of the terms has been adopted: a 'battery' is a battery which becomes the sole power source for receivers in the given assembly only during selected time intervals, when the abovementioned receivers cannot be powered by the primary alternative source of energy.

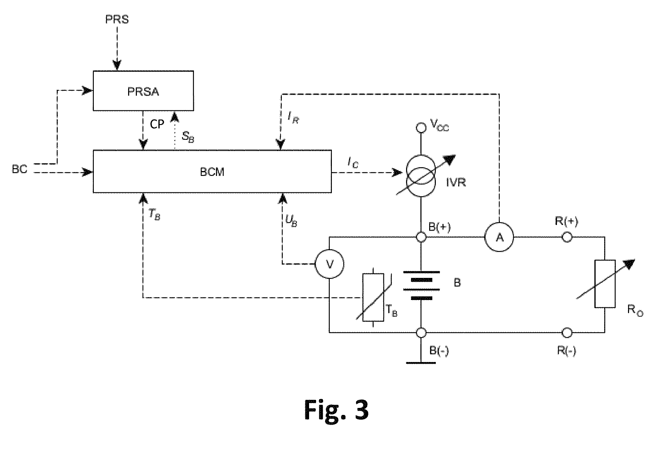

In accordance with the first embodiment presented in fig. 3, the battery charging system according to the invention comprises the battery B which is connected to the clamps B(+) and B(-) of the battery charging device. The load RO represents current receivers of varying characteristics, connected to the clamps R(+) and R(-). The voltage V measurement and the discharging current A measurement assemblies of the battery deliver information to a module BCM (the status analyser module which controls the adjustable source of current with a voltage limiter IVR of the battery) on the current voltage in the clamps of the battery VB and on the current IR drawn by the load RO.

The module BCM for battery status analysing and for controlling an adjustable source of current with a voltage limiter of the battery, based on the measurement of voltage in the clamps of the battery VB and on the tracing of charging current Ic and discharging current IR, on the measurement of the current temperature of the battery Tb and on the characteristics of the used battery acquired from the BC memory, calculates the charging level of the battery and outputs an information SB at least on the currently stored available charge $Q_{init}$ in the battery B. In a case of the negative temperature of the battery Tb, its useful capacity is considerably limited in relation to the nominal capacity, and this fact is taken into account in the abovementioned estimation.

The information SB on the status of the battery, including the information on the currently stored charge $Q_{init}$ is conveyed from the module BCM for battery status analysing and for controlling an adjustable source of current with a voltage limiter of the battery to the energy demand analyser module PRSA.

The module PRSA of the energy demand analyser also collects information on the predicted plan of energy demand from the memory module PRS with a predicted plan of the charging and discharging periods of the battery and with the load predicted for those periods. For example, it can be a memory module of an on-board system of a vehicle or a separate memory module located in the energy demand analyser module PRSA. For example, the predicted plan of the energy demand in the PRS module may be created based on the timetable of the vehicle, in particular based on the information on the stops and the scheduled time of travel as well as the duration of stoppage at the terminus.

The data in the memory module PRS with the predicted plan of the charging and discharging periods of the battery and with the load predicted for those periods is inter alia the data on the energy demand of the devices connected to the battery B along with the information on their features: particularly on the possibility to control their energy draw or on the priority of a complete shutdown. This information can be determined partially statistically at the step of configuration of the device in the vehicle. It is an information on the predicted load Ro, i.e. on the devices present in the vehicle, e.g. air conditioning system, lighting, multimedia system, particularly on the characteristics of their energy demand, possibility to forcibly limit/diminish the energy draw e.g. by dimming the lighting, priorities of their possible shutdown when necessary. This information may be determined partially dynamically during everyday operation of the vehicle. The group of information created dynamically also includes the information on the planned charging and discharging cycles of the battery, resulting from the method of using the vehicle, as well as on the load Ro, i.e. the devices activated within the periods when the power is drawn from the battery B. For example, travelling according to an hour by hour timetable, which is known in advance for the whole day or for the major part of the day, is typical for public transport. In such case the information on the planned charging and discharging cycles of the batteries overlaps the operating time of the engine, which operates during the realisation of the travel, while it is shut down on the stops along the route and the terminuses. For terminuses, the plan of activating energy receivers is also correlated with the realisation of the transport task and precisely determined. The data on whether and for how long and in what hours during stoppage at the terminus the lighting of the cockpit, the information boards, the advertisement systems etc. are on, and how much energy they can consume within the given timeframe, may be present in the memory module PRS.

The energy demand analyser module PRSA iteratively determines the energy demand, i.e. the desired minimum charge for a specific prearranged period, based on the data from the module PRS, for example taking into account the predicted time of discharging, i.e. the time of using the energy stored in the battery $T_{pred\_decharr}$ the predicted current which would be drawn during that time $I_{pred\_dechar}$.

Preferably, in a case of public transport vehicles, the energy demand, i.e. $Q_{req}$ is calculated for the duration of a full daily travel of the vehicle, meaning e.g. from leaving the depot till the time of returning to the depot and shutting down all the electrical and electronic devices whose power is provided by the battery B. A person skilled in the art will know that depending on the use, the appropriate calculations may be performed with any frequency, it being possible to calculate the energy demand $Q_{req}$ for shorter periods, i.e. for each stoppage of the vehicle, for each partial discharging of the battery. Another advantage of the invention is that in a case when high energy demand is predicted upon the completion of the travel (e.g. maintaining the power of the visual monitoring system), charging of the battery may be divided into a certain number of cycles over a longer time period, by doing so diminishing the charging current in each cycle, and thnaks to this diminishing the energy losses within the electrical wiring of the vehicle.

In reality, for example in order to determine the energy demand $Q_{req}$ over a selected period T, the module PRSA may execute the following actions: determining the predicted time of using the energy stored in the battery Tpred_dechar, which results from the average predicted velocity of the vehicle and the distance between stops acquired from the memory module as well as the estimated time of stoppage on the terminus, or it acquires an information on the time of travel and stoppage from the timetable, or it acquires from the memory module a prearranged predicted time of using the energy stored in the battery $T_{pred\_dechar}$, which was previously determined experimentally for the selected route between stops. Moreover, based on the predicted value of the load Ro which is known to it, the module PRSA may determine the current $I_{pred\_dechar}$ which will be drawn during that time by the applied load Ro, or it acquires from an external system a predetermined information on the current $I_{pred\_dechar}$ which during this time will be drawn by the applied load Ro. The value of the charge $Q_{req}$ is acquired as a result of the calculations performed by the module PRSA, determining the predicted energy demand within the selected timeframe.

Upon calculating $Q_{req}$ the energy demand analyser module PRSA generates a charging current control information CP of the battery B based on an analysis of the energy balance, which takes into account the predetermined desired minimum charge $Q_{req}$ and the current information on the status of the battery from the module BCM for battery status analysing and controlling an adjustable source of current with a voltage limiter of the battery. The module PRSA of the energy demand analyser is connected to the module BCM for battery status analysing and controlling an adjustable source of current with a voltage limiter of the battery, from which it acquires the current data on the status of the battery B.

Preferably, the module PRSA of the energy demand analyser analyses the energy balance, i.e. it compares the difference of the determined future energy demand $Q_{req}$ under the load Ro with the sum of the current state of charge of the battery $Q_{init}$ and the charge $Q_{pred\_charg}$ meaning the charge possible to be delivered to the battery within the period which said analysis involves, and checks whether the result is still higher than the value of the minimum allowed charge $Q_{min}$, the calculations taking into account the predicted available charging time $T_{pred\_charg}$ of the battery B, which time is acquired from the memory module PRS and results e.g. from the planned time of travel between any two stops, e.g. the terminuses.

As part of analysing the energy balance, and particularly as a result of the determination of the minimum and maximum value of the charge $Q_{pred\_charg}$ meaning the charge possible to be delivered to the battery within the period which the analysis involves, the module PRSA determines the optimal minimum charging current Icharg and the charging time Tcharg. In other words, the module PRSA generates the information CP on the recommended battery charging rate (charging current) sufficient to store such an amount of energy (electrical charge) in the battery B, so that in the subsequent discharging cycles of the battery the voltage and the current are provided for the load points RO without extensive discharging of the battery B.

The module PRSA performs the abovementioned calculations, ongoingly determining the new value of CP as the analysed parameters change and the energy is continuously consumed.

The module PRSA ongoingly conveys in an iterative manner to the module BCM the determined information CP for controlling the charging current of the battery $I_{charg}$ and the charging time of the battery $Tc_{harg}$. In special cases, during the calculations the module PRSA takes into account the current temperature of the battery B and its characteristics stored in the memory module BC.

The module BCM for battery status analysing and controlling an adjustable source of current with a voltage limiter of the battery is subsequently responsible for realising the charging process, taking into account the control information CP received from the module PRSA by controlling the adjustable source of current IC with the voltage limiter IVR, wherein it is able to continuously modify the charging process in a case of changing external conditions (including the temperature), based on ongoing readouts from the temperature sensor, as well as based on ongoing measurements of the factual discharging current $I_{decharg}$ so that the optimal working point of the battery B is chosen and the battery is not damaged.

Any information on the characteristics of the given battery is stored in the corresponding memory module BC, which is connected to the module PRSA and the module BCM. The information BC includes inter alia such characteristics and parameters of the battery B as: nominal capacity of the battery, dependence of the voltage in the battery clamps on the stored charge, relation between the degree of degradation of the battery life and the extent of discharging, dependence of the capacity and the internal resistance of the battery on the temperature of the battery, recommended minimum and maximum charging current, estimated degradation of the battery capacity, characteristics of the degradation of the battery life depending on the top charging level. As a result, the characteristics of the battery in the memory module BC allow the module PRSA to determine the optimal recommended charging current IP, and the module BCM to safely control the adjustable source of current and control the maximum voltage IVR so that the battery is not damaged.

Thanks to the use of proper modules, including the controlled adjustable source of current with the limiter IVR (BCM), a battery charging system with the adjustment of the charging current based on information on the energy demand plan of the powered system is obtained, in which the energy demand analyser PRSA determines the charging current of the battery in order to ensure powering of the system, optimisation of the battery life, and diminishing the energy losses in the circuit of the battery when charging the battery.

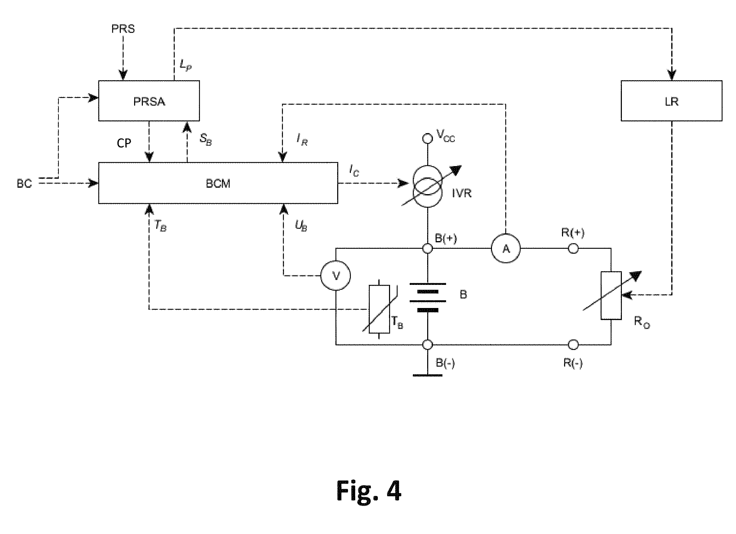

Fig. 4 presents a preferable embodiment of the battery charging system according to the invention, in which the module PRSA of the analyser comprises means for generating a control information LP for an external load reduction assembly. In this embodiment the module PRSA also analyses the energy balance in order to determine the optimal battery B charging current and time, however in a case of detecting an inability to fulfil the total energy demand by charging, and/or the insufficient energy stored in the battery B in accordance with the predicted energy demand, said means for generating the control information LP for an external assembly LR for the reduction of load Ro generate the proper control information LP (based on information collected from the memory module PRS) for at least one external load reduction assembly LR. The load reduction assemblies diminish the current draw of the receivers Ro, e.g. by switching off the power to one or more modules Ro or by limiting the current draw of some devices (e.g. dimming the lighting).

Thanks to the use of an external load reduction assembly LR which limits the energy draw, based on the analysis of the energy demand of the system and with the adapted maximum allowed degree of discharge of the battery $Q_{min}$ it is possible to maintain the proper energy balance in the battery B, guaranteeing their longer life.

The method according to the invention is realised preferably in the battery charging system according to the invention. All steps of the method may be performed multiple times with any frequency, thans to which an adaptive charging method is obtained, comprehensively extending the life of the battery.

For at least one working cycle of the battery, i.e. for a sum of the periods of an individual charging and discharging cycle, in the energy demand analyser module PRSA the calculations of the energy balance are performed according to Formula 1:

$$Q_{init} + Q_{pred\_charg} - Q_{req} \geq Q_{min} \qquad \text{Formula 1}$$

Where:

$Q_{init}$- the charge stored in the battery B when performing the calculations,

$Q_{req}$- the charge predicted to be acquired from the battery within the predicted time which the analysis involves,

$Q_{pred\_charg}$- the charge possible to be delivered to the battery within the predicted time which the analysis involves,

$Q_{min}$ - the minimum charge which must remain in the battery for its proper functioning.

The module PRSA acquires the $Q_{init}$ parameter from the module BCM for battery status analysing and controlling an adjustable source of current with a voltage limiter of the battery as one of the pieces of information SB on the current status of the battery B. Particularly, the module BCM calculates $Q_{init}$ based on the measurement of the voltage on the clamps of the battery B, on the tracing of the charging current IR and discharging current IR and on the characteristics of the used battery B.

The $Q_{min}$ parameter is determined in the module PRSA based on the nominal capacity of the battery $Q_{max}$ acquired from the memory module BC, the current temperature of the battery TB, the characteristics of the battery acquired from the memory module BC and the allowed degree of discharge of the used battery ADL from the memory module BC for storing the information on the characteristics of the battery B.

The $Q_{req}$ parameter, meaning the predicted charge to be acquired from the battery B in the subsequent discharging cycles, is determined by the module PRSA based on the information acquired from the memory module PRS, including the predicted value of load Ro, the calculations taking into account such parameters as:

$T_{pred\_decharg}$ - the predicted discharge time of the battery in a cycle i,

$I_{pred\_dechar}$ - the predicted discharging current of the battery in a cycle i,

As a result of solving Formula 1, the module PRSA determines:

$T_{charg}$ - the recommended battery charging time in a cycle i, with $T_{charg} < T_{pred\_charg}$,

$I_{charg}$- the recommended charging current, wherein it is the minimum charging current which ensures storing the necessary charge.

Formula 2 presents a particular condition of ensuring the energy balance in an individual charging and discharging cycle expressed as a function of the charging current and time as well as the discharging current and time of the battery.

$$Q_{init\_i-1} + \int_{Tch\arg} I_{ch\arg}dt - \int_{Tdech\arg} I_{dech\arg}dt \geq Q_{min}$$

Formula 2

As mentioned above, the predicted discharging current $I_{decharg}$, the discharge time $T_{decharg}$ are determined in the module PRSA based on the energy demand plan determined based on the information from the memory module PRS.
Formula 3 presents the general condition of providing the energy balance of the system in a series of n charging and discharging cycles of the battery, starting from the activation of the system when the initial charge stored in the battery equals $Q_{init\_i-1}$.

$$Q_{init\_i-1} + \sum_{i=1}^{n} \int_{Tch\arg} I_{ch\arg}dt - \sum_{i=1}^{n} \int_{Tdech\arg} I_{dech\arg}dt \geq Q_{min}$$

for $\forall i \in 1..n$

Formula 3

The purpose of the module PRSA of the energy demand analyser is to find a solution for formula 5, in which the value of the charging current $I_{charg}$ is minimal and at the same time it does not exceed the maximum recommended charging current of the used battery.
The analysis of the energy balance may alternatively take into account changes in the values of Qinit and Qmin resulting from currently measured atmospheric conditions, including the temperature, which data may be delivered by the module BCM.
In a case of detecting an inability to solve Formula 5, the module of the analyser PRSA can diminish the value of $Q_{min}$ correspondingly to the current degree of consumption of the battery, by doing so increasing the allowed degree ADL of the battery discharge, or it may determine the charging current $I_{charg}$ above the recommended maximum for the given battery, or use both those solutions at the same time, wherein PRSA deciding about the choice of the solution based on the characteristics of the battery saved in the BC module, following the resulting diminished consumption of the battery.
In an alternative embodiment of the battery charging method according to the invention, in a case of detecting an inability to determine the battery charging current and the available time based on the energy balance, the module PRSA provided with means for generating a control information LP for an external load reduction assembly, determines the level of the energy shortage and based on it, as well as based on the information acquired from the memory module PRS, the control information LP is generated for at least one external load reduction assembly LR.

In order to properly charge the battery B, the module BCM for battery status analysing and controlling an adjustable source of current with a voltage limiter of the battery, which controls the charging process, acquires from the memory module BC for storing the information on the characteristics of the battery B at least the following data: nominal voltage of the battery, characteristics of the battery B. At the same time, the module BCM for battery status analysing and controlling an adjustable source of current with a voltage limiter of the battery acquires information on the expected charging current Icharg from the module PRSA. Thanks to this information the charging current IC and the voltage IVR are determined in the module BCM.

The battery charging system and method according to the invention can be used in any vehicles, particularly in the public transport vehicles, in which it is possible to ongoingly acquire the information about the scheduled timetables, the distances between stops, the scheduled travel time between stops, the duration of stoppages etc. As mentioned, the system can have its own memory, in which the timetable loaded once prior to the beginning of the travel may be stored. A preferable solution is coupling the invention with an on-board system (e.g. a passenger information system), which automatically acquires the information on the timetable from the carrier. In a case of an inability to acquire from any memory module the plan of the work schedule of the battery, e.g. the timetable for the given travel, the system can work in one of several predefined modes: e.g. charging the battery with the maximum allowed current, charging the battery with the current of the predetermined value, etc.

**Claims**

1. A battery charging system, particularly in a vehicle, comprising an battery B chargeable from a primary source of energy, connected to a battery charging device, as well as a voltage V measurement assembly of the battery and a discharging current A measurement assembly, **characterised in that** the battery charging device comprises a memory module BC with a characteristics of the battery B, a memory module PRS with a predicted work plan of the battery and a predicted load, a module PRSA of the energy demand analyser adjusted to generate a charging current control information CP of the battery B based on the analysis of the energy balance, connected to a module BCM for battery status analysing and controlling an adjustable source of current with a voltage limiter of the battery.

2. The system according to claim 1, **characterised in that** the module PRSA of the energy demand analyser comprises means for generating a control information LP for at least one external load reduction assembly LR.

3. The system according to claim 1, **characterised in that** the module BCM for battery status analysing and controlling an adjustable source of current with a voltage limiter of the battery comprises means for determining the state of charge of the battery taking into account at least the ambient temperature.

4. The system according to claim 1 or claim 2 or claim 3, **characterised in that** the memory module PRS with a predicted work plan of the battery and a predicted load comprises an information on the timetable of the vehicle and a catalogue of information on the devices installed in the vehicle.

5. The system according to claim 1 or claim 2 or claim 3 or claim 4, **characterised in that** the primary source of energy is an internal combustion engine.

6. The system according to claim 1 or claim 2 or claim 3 or claim 4, **characterised in that** the primary source of energy is an electrical grid.

7. A battery charging method, particularly in a vehicle, comprising a step of measuring the current state of charge of the battery by measuring the voltage and the discharging current, **characterised in that** it also comprises a step

   - of delivering an information on the characteristics of the battery B,
   - of delivering an information on the predicted work plan of the battery and on the planned load,
   - of delivering an information on the allowed minimum charge in the battery
   - of determining the energy demand for at least one discharging cycle of the battery B
   - of determining the battery charging current and time for at least one charging cycle of the battery B as part of the analysis of the energy balance, based on the information on the characteristics of the battery B, the current state of charge of the battery B, the allowed minimum charge of the battery B and the energy demand for at least one discharging cycle of the battery B
   - of controlling an adjustable source of current with a voltage limiter of the battery based on the determined battery charging current and time for at least one charging cycle of the battery B.

8. The method according to claim 7, **characterised in that** the battery charging current and time are determined based on the energy balance formula in a single charging and discharging cycle expressed as a function of the charging and discharging current and time of the battery

$$Q_{init\_i-1} + \int_{Tch\arg} I_{ch\arg} dt - \int_{Tdech\arg} I_{dech\arg} dt \geq Q_{\min} .$$

9. The method according to claim 7 or 8, **characterised in that** the battery charging current and time are determined based on the energy balance formula

$$Q_{init\_i-1} + \sum_{i=1}^{n} \int_{Tch\arg} I_{ch\arg} dt - \sum_{i=1}^{n} \int_{Tdech\arg} I_{dech\arg} dt \geq Q_{\min}$$

in a series of n charging and discharging cycles of the battery, from the activation of the system when the charge stored in the battery equals $Q_{init\_i-1}$.

10. The method according to claim 8 or 9, **characterised in that** in a case when it is impossible to determine the battery charging current and time based on the energy balance, the value of Qmin is diminished according to the current degree of consumption of the battery.

11. The method according to claim 7 or 8 or 9 or 10, **characterised in that** the step of delivering the information on the predicted work plan of the battery involves the delivery of information on the timetable of the vehicle.

12. The method according to claim 7 or 8 or 9 or 10 or 11, **characterised in that** in a case when an inability to determine the battery charging current and time based on the energy balance is detected, a control information LP is generated for at least one external load reduction assembly LR.

Temperature +25°C

FIG. 1 State of the art.

Influence of the temperature on the capacity

FIG. 2 State of the art.

Fig. 4

Fig. 3

Europäisches
Patentamt

European
Patent Office

Office européen
des brevets

# EUROPEAN SEARCH REPORT

Application Number

EP 15 46 1592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/197094 A1 (VOLVO TRUCK CORP [SE]) 30 December 2015 (2015-12-30) * pages 7-14,18; figures 1,2,4,7 * | 1-12 | INV. B60L11/18 B60L1/00 B60L11/12 |
| Y | WO 2013/055830 A1 (PROTERRA INC [US]; SARKAR REUBEN [US]; MCGRATH SEAMUS [US]; FINNERN MI) 18 April 2013 (2013-04-18) * claim 1 * * paragraphs [0047] - [0055], [0070], [0074] - paragraph [0076] * | 1 | |
| Y | US 2014/081490 A1 (ADELMAN KIM [US]) 20 March 2014 (2014-03-20) * paragraphs [0030], [0059], [0067]; claim 18 * | 1 | |
| Y | US 2013/138285 A1 (BOZCHALUI MOHAMMAD CHEHREGHANI [US] ET AL) 30 May 2013 (2013-05-30) * paragraphs [0006] - [0015], [0099] * | 1 | |
| Y | EP 2 602 900 A1 (MITSUBISHI MOTORS CORP [JP]; MITSUBISHI CORP [JP]; MITSUBISHI ELECTRIC) 12 June 2013 (2013-06-12) * column 0023 - column 33; claim 1 * | 1 | |
| Y | US 2013/024035 A1 (ITO AKIRA [JP] ET AL) 24 January 2013 (2013-01-24) * claim 1 * | 1 | |
| Y | WO 2015/049969 A1 (TOSHIBA KK [JP]) 9 April 2015 (2015-04-09) * page 70; claims 1,13 * | 1 | |
| X | JP 2011 120327 A (PANASONIC CORP) 16 June 2011 (2011-06-16) * the whole document * | 1 | |

TECHNICAL FIELDS
SEARCHED (IPC)

B60L

-/--

The present search report has been drawn up for all claims

| Place of search | Date of completion of the search | Examiner |
|---|---|---|
| The Hague | 20 June 2016 | Schury, Dominik |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

**EUROPEAN SEARCH REPORT**

Application Number

EP 15 46 1592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2012 209645 A1 (SIEMENS AG [DE]) 12 December 2013 (2013-12-12) * claim 4 * * claims 4,7,9,13,15 * ----- | 3 | |

TECHNICAL FIELDS SEARCHED     (IPC)

The present search report has been drawn up for all claims

| Place of search | Date of completion of the search | Examiner |
|---|---|---|
| The Hague | 20 June 2016 | Schury, Dominik |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

**EP 3 187 361 A1**

## ANNEX TO THE EUROPEAN SEARCH REPORT
## ON EUROPEAN PATENT APPLICATION NO.

EP 15 46 1592

20-06-2016

| Patent document cited in search report | | Publication date | Patent family member(s) | | Publication date |
|---|---|---|---|---|---|
| WO 2015197094 | A1 | 30-12-2015 | NONE | | |
| WO 2013055830 | A1 | 18-04-2013 | CA | 2851503 A1 | 18-04-2013 |
| | | | EP | 2766216 A1 | 20-08-2014 |
| | | | TW | 201331066 A | 01-08-2013 |
| | | | US | 2014217976 A1 | 07-08-2014 |
| | | | WO | 2013055830 A1 | 18-04-2013 |
| US 2014081490 | A1 | 20-03-2014 | NONE | | |
| US 2013138285 | A1 | 30-05-2013 | NONE | | |
| EP 2602900 | A1 | 12-06-2013 | CN | 103190051 A | 03-07-2013 |
| | | | EP | 2602900 A1 | 12-06-2013 |
| | | | JP | 5666593 B2 | 12-02-2015 |
| | | | US | 2013162025 A1 | 27-06-2013 |
| | | | WO | 2012017936 A1 | 09-02-2012 |
| US 2013024035 | A1 | 24-01-2013 | DE | 102012212878 A1 | 24-01-2013 |
| | | | JP | 5672186 B2 | 18-02-2015 |
| | | | JP | 2013027214 A | 04-02-2013 |
| | | | US | 2013024035 A1 | 24-01-2013 |
| WO 2015049969 | A1 | 09-04-2015 | CN | 105637543 A | 01-06-2016 |
| | | | JP | 2015092328 A | 14-05-2015 |
| | | | WO | 2015049969 A1 | 09-04-2015 |
| JP 2011120327 | A | 16-06-2011 | NONE | | |
| DE 102012209645 | A1 | 12-12-2013 | DE | 102012209645 A1 | 12-12-2013 |
| | | | WO | 2013182382 A2 | 12-12-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0386812 A
- CN 2783342 Y